# EUROPÄISCHE PATENTSCHRIFT

(11) **EP 0 736 432 B1**
(45) Veröffentlichungstag und Bekanntmachung des Hinweises auf die Patenterteilung: **19.05.2004**
(21) Anmeldenummer: 96101473.5
(22) Anmeldetag: 02.02.1996
(51) Int. Cl.: B60T 17/08, F16D 65/32

(54) **Betätigungsvorrichtung für Bremsgeräte von Schienenfahrzeugen**
Actuator for brakes of railway vehicles
Actionneur de frein de véhicules ferroviaires

(30) Priorität: 06.04.1995 DE 19512997
(43) Veröffentlichungstag der Anmeldung: 09.10.1996
(73) Patentinhaber: KNORR-BREMSE Systeme für Schienenfahrzeuge GmbH, 80809 München (DE)
(72) Erfinder: Staltmeir, Josef, D-80807 München (DE); Fuderer, Erich, D-82256 Fürstenfeldbruck (DE)

(56) Entgegenhaltungen:
- EP-A- 0 001 805
- FR-A- 1 465 672
- US-A- 4 552 056
- DR.-ING. FRIEDRICH SAUTHOFF: "Die KE-Bremse eine neue Druckluftbremse für Güter- und Reisezüge" DER EISENBAHNER, Nr. 5b,6b, 1954, Seiten 137-175, XP002092924

## Beschreibung

Die Erfindung bezieht sich auf eine Betätigungsvorrichtung für bremskrafterzeugende oder -übertragende Bremsgeräte von Schienenfahrzeugen, die einen von einem willkürlich bewegbaren Betätigungsorgan aus im wesentlichen geradlinig entgegen einer elastischen Kraft, insbesondere einer Feder, zu bewegenden Betätigungsstößel zum willkürlichen Betätigen einer Sperre, Kupplung, Bremse, eines Ratschengetriebes oder dergleichen aufweisen.

Eine derartige Betätigungsvorrichtung ist beispielsweise aus der EP-B-0001805 bekannt, dort dient sie zum willkürlichen Lösen einer Drehsperre, welche der Notlöseeinrichtung eines Federspeicherbremszylinders zugehört. Der Betätigungsstößel ist außerhalb des Zylindergehäuses mit einem Handgriff versehen, es ist jedoch auch naheliegend, dort einen zu einem an gut zugänglicher Stelle des Schienenfahrzeuges angeordneten, willkürlich betätigbaren Betätigungsorgan, insbesondere einer Betätigungsöse, führenden, geradlinig weiterverlaufenden Drahtzug anzulenken. Das Betätigungsende des Betätigungsstößels greift hierbei als Sperrklinke gegen eine Federkraft aushebbar zwischen die Sperrzähne eines Sperrzahnrades ein, welches mit einem drehbaren Teil eines nichtselbsthemmenden Schraubgetriebes der Notlöseeinrichtung koppelbar ist.

Aus der FR-A-1.465.672 ist es beispielsweise bekannt, einen Spannhebel zum Spannen und Notlösen eines Federspeichers um eine Schwenkachse zu schwenken, wobei die Ebene der möglichen Schwenkbewegung durch die Schwenkachse vorgegeben wird. Eine entsprechende Lösung ist auch aus der US 4,552,056 bekannt.

Ähnliche Betätigungsvorrichtungen sind auch zum willkürlichen bzw. manuellen Schalten oder Betätigen anderer, bremskrafterzeugender oder -übertragender Bremsgeräte, beispielsweise zum Rückstellen von losen oder in Bremszylinder integrierten Gestängestellern, bekannt. Diese Bremsgeräte können andersartige, zu betätigende Organe, wie Reib-, insbesondere Schlingfederkupplungen und -bremsen, durch wiederholtes, geradliniges Bewegen eines dem Betätigungsstößel entsprechenden Teils betätigbare Ratschengetriebe oder dergleichen aufweisen.

Allen diesen bekannten Betätigungsvorrichtungen haftet der Mangel an, daß sie hinsichtlich ihrer manuellen Betätigungsrichtung wenig flexibel sind, da die manuelle Betätigung etwa in Verlängerungsrichtung des Betätigungsstößels erfolgen und die Betätigungsvorrichtung also mit Orientierung zu dem manuellen Betätigungsort angeordnet werden muß: Das Betätigungsorgan muß somit in Verlängerungsrichtung des Betätigungsstößels angeordnet sein. Dies ist oftmals konstruktiv schwierig und erfordert für unterschiedliche Einbausituationen jeweils speziell angepaßte Konstruktionsvarianten inbesondere auch der zu betätigenden Bremsgeräte. Se.ilzug-Umlenkungen in den manuellen Betätigungsvorrichtungen können diesem Mangel aus Kosten-, Betriebszuverlässigkeits- und Wartungsgründen nicht abhelfen.

Für das Auslöseventil des weitverbreiteten KE-Bremssteuerventils, wie es beispielsweise im "Sonderdruck aus der Zeitschrift DER EISENBAHNER, Nr.5B und 6B/1954". mit dem Titel "Die KE-Bremse eine neue Druckluftbremse für Güter- und Reisezüge", gezeigt ist, ist es bekannt, gegenüber dem freien Ende eines Ventilstößels einen Kippteller anzuordnen, der unter Federkraft ventilstößelabgewandt auf einer Gehäuseringfläche aufliegt. Seitens seiner Auflage ist der Kippteller mit einem ins Freie ragenden Betätigungshebel versehen, dessen Ende einen Querhebel trägt, an welchem zwei zu an gegenüberliegenden Fahrzeugseiten angeordneten Betätigungsorganen in Verlängerungsrichtung des Querhebels verlaufende DrahtzUge einhängbar sind. Am Gehäuse ist ein den Betätigungshebel übergreifendes Glockenteil gehaltert, welches zum beweglichen Durchtritt des Querhebels gegenüberliegend geschlitzt ist. Das Auslöseventil ist somit von zwei gegenüberliegenden Seiten aus unter Kippen des Kipptellers betätigbar.

Es ist Aufgabe der Erfindung, eine Betätigungsvorrichtung der eingangs genannten Art mit einfachen Mitteln derart auszubilden. daß sie flexibel, ohne spezielle Anpassungen oder Sonderanfertigungen, für nahezu alle Einbauverhältnisse mit deren unterschiedlichen, manuellen Betätigungsrichtungen verwendbar ist.

Diese Aufgabe wird für eine Betätigungsvorrichtung mit den eingangs genannten Merkmalen nach der Erfindung durch die kennzeichnen den Merkmale von Anspruch 1 gelöst. Hierdurch ergibt sich eine mit dem Betätigungsstößel koppelbare Getriebevorrichtung zum Umlenken einer vom Betätigungsorgan ausgehenden Betätigungsbewegung beliebiger Richtung, außer zumindest annähernd in Richtung der Federbelastung des Betätigungsstößels, in eine den Betätigungsstößel entgegen seiner Federbelastung bewegende Betätigungsrichtung.

Eine so ausgebildete Betätigungsvorrichtung bietet den Vorteil, nahezu immer das durch die Betätigungsvorrichtung betätigbare Bremsgerät in dessen günstigster Lage im Fahrzeug montieren zu können, ohne Rücksicht auf die sich hierbei ergebende Längsrichtung des Betätigungsstößels und den Ort des Betätigungsorgans. Die Betätigungs vorrichtung gewahrleistet dabei, daß eine aus nahezu beliebiger Richtung erfolgende, also beispielsweise von einem unabhängig von der Lage des Betätigungsstößels allein nach Zugänglich- und Bedienungsfreundlichkeitsgesichtspunkten am Fahrzeug positionierten Betätigungsorgan ausgehende Betätigungsbewegung in eine zum Betätigungsstößel koaxial verlaufende Bewegungsrichtung umgesetzt wird, durch welche der Betätigungsstößel zwangsfrei entgegen seiner Federbelastung bewegbar ist.

Die Merkmale des Anspruches 2 zeigen eine nach der Erfindung besonders vorteilhafte Ausbildung der Betätigungsvorrichtung und die nachfolgenden Ansprüche weitere, vorteilhafte Ausgestaltungsmöglichkeiten.

In der Zeichnung sind bevorzugte Ausführungsbeispiele für nach der Erfindung ausgebildete Betätigungsvorrichtungen jeweils im Axialschnitt und zum Teil schematisiert dargestellt, und zwar zeigt
- Fig.1: die Betätigungsvorrichtung in Verbindung mit einem Federspeicherbremszylinder im Ruhezustand,
- Fig.2 bis 4: die Betätigungsvorrichtung nach Fig.1 In unterschiedlichen Stellungen und In vergrößertem Maßstab,
- Fig.5: ein weiteres Ausführungsbeispiel der Betätigungsvorrichtung.

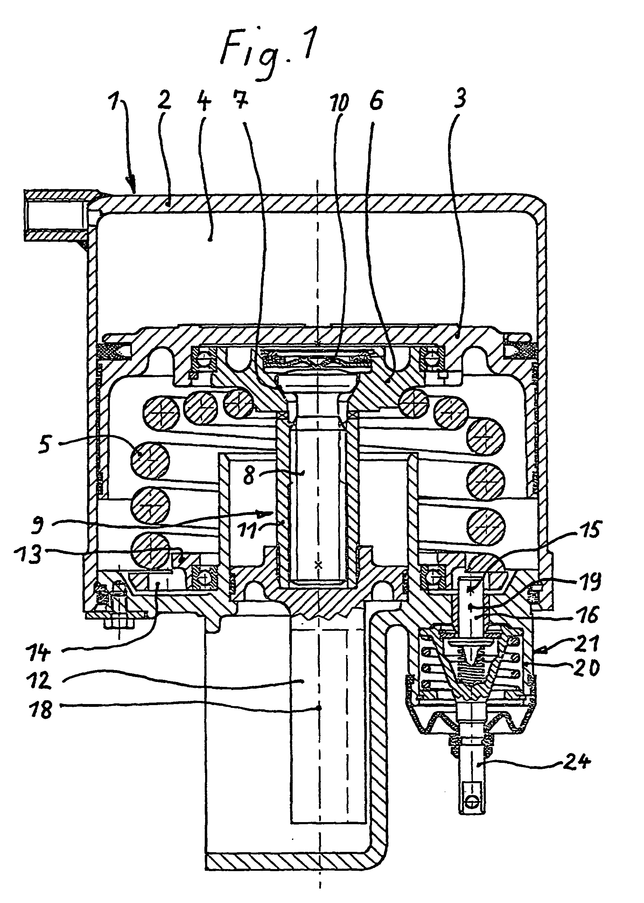

Die Fig.1 zeigt als Bremsgerät einen Federspeicherbremszylinder 1, in dessen Gehäuse 2 ein Kolben 3 durch Druchmittelbeaufschlagen eines Beaufschlagungsraumes 4 entgegen der Kraft einer Speicherfeder 5 verschieblich gelagert ist. Die Speicherfeder 5 stützt sich gegen einen am Kolben 3 drehbar gehalterten Federteller 6 ab, der über eine in dessen Belastungsrichtung durch die Speicherfeder 5 schließende Konuskupplung 7 mit einer Gewindespindel als drehbares Teil 8 eines nichtselbsthemmenden Schraubgetriebes 9 kuppelbar ist: eine Feder 10 belastet das Teil 8 zusätzlich in Schließrichtung der Konuskupplung 7. Das Tell 8 ist mit einer Mutter 11 verschraubt, welche undrehbar an der Kolbenstange 12 des Federspeicherbremszylinders 1 gehaltert ist. Dem Kolben 3 abgewandt stützt sich die Speicherfeder 5 gegen einen Federteller 13 ab, der drehbar gegen das Gehäuse 2 abgestützt ist. Der Federteller 13 ist nahe seines Umfanges mit auf einem Teilkreis angeordneten Bohrungen versehen, deren Wandungen Sperrzähne 14 bilden, zwischen welche das in die Bohrungen einführbare Betätigungsende 15 eines Betätigungsstößels 16 in Art einer Sperrklinke einzugreifen vermag.

Bei drucklosem Beaufschlagungsraum 4 stützt sich die Speicherfeder 5 einerseits über den vom Betätigunggsstößel 16 undrehbar gehaltenen Federteller 13 gegen das Gehäuse 2 ab und belastet andererseits über die geschlossene Konuskupplung 7 das undrehbar mit ihr gekoppelte Teil 8; über das Schraubgetriebe 9 wird diese Belastung als Bremsbetätigungskraft auf die Kolbenstange 12 übertragen. Zum Notlösen ist das Betätigungsende 15 des Betätigungsstößels 16 aus den Sperrzähnen 14 auszurasten, der Federteller 13 wird dabei drehbar und unter der das Schraubgetriebe 9 belastenden Spannung beginnen das Teil 8 und die Federteller 6 und 13 mitsamt der Speicherfeder 5 zu rotieren, wobei sich das Teil 8 in Entspannungsrichtung der Speicherfeder 5 relativ zur Kolbenstange 12 verschraubt.

Der Aufbau und die Funktionsweise des Federspeicherbremszylinders entsprechen damit dem- bzw. derjenigen des Fedrspeicherbremszylinders nach der bereits erwähnten EP-B-0001805.

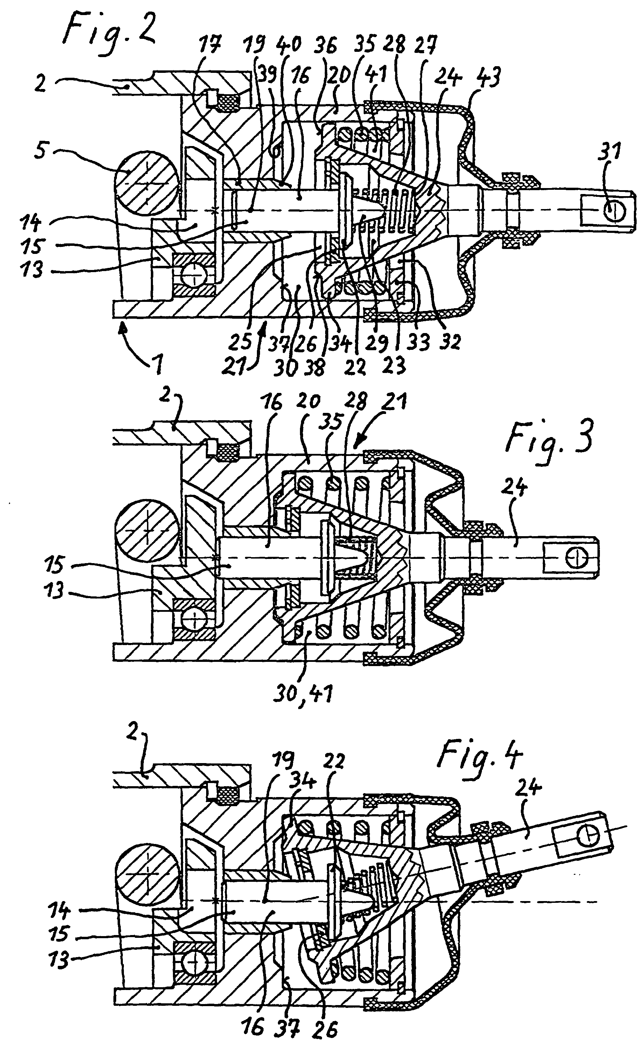

Aus Fig.2 und der nicht alle nachstehend erwähnten Bezugszahlen zeigenden Fig.1 ist ersichtlich, daß der Betätigungsstößel 16 in einer Führungsbuchse 17 mit parallel zur Achse 18 des Federspeicherbremszylinders 1 verlaufender Längs- bzw. Achsrichtung 19 verschieblich geführt ist, die Führungsbuchse 17 ist in einem mit dem Gehäuse 2, insbesondere dem Zylinderdeckel des Federspeicherbremszylinders 1, einstückig ausgebildeten Gehäuse 20 einer Betätigungsvorrichtung 21 gehaltert. Dem Betätigungsende 15 abgewandt endet der Betätigungsstößel 16 mit einem radial auskragenden Außenflansch 22, der sich in einer glocken- bzw. hohlkegelartigen Ausnehmung 23 eines Hebels 24 befindet, die Basis der Ausnehmung, also deren weiteste Stelle, befindet sich betätigungsstößelseitig. Nahe der Mündung 25 ragt in die Ausnehmung 23 ein am Hebel 24 gehalterter Innenflansch 26, der den Betätigungsstößel 16 mit Spiel umfaßt und der den Außenflansch 22 betätigungsstößelseitig hintergreift, der Innendurchmesser des Innenflansches 26 ist kleiner als der Außendurchmesser des Außenflansches 22. Zwischen den Boden 27 der Ausnehmung 23 und den Außenflansch 22 ist eine Feder 28 eingespannt, am Betätigungsstößel 16 befindet sich ein von seinem Außenflansch 22 ausgehender Führungskegel 29, der in die Feder 28 eingreift und diese in ihrer Lage hält.

Der Hebel 24 erstreckt sich nach Fig.1 in seiner Ruhestellung und auch nach Fig.2 in Verlängerungsrichtung, koaxial, zum Betätigungsstößel 16 aus einer seinen Abschnitt mit der glockenartigen Ausnehmung 23 aufnehmenden Ausnehmung 30 des Gehäuses .20 ins Freie und endet dort mit einer ösenförmigen Koppelstelle 31, an welche ein nicht dargestellter Betätigungszug zu einem ebenfalls nicht dargestellten Betätigungsorgan ankoppelbar ist. Vom Gehäuse 20 erstreckt sich zum Hebel 24 ein die Mündung 32 der Ausnehmung 30 abdeckender Staubschutzbalg 43. Die Ausnehmung 30 ist im wesentlichen sacklochartig ausgebildet, nahe ihrer Mündung 32 ist ein am Gehäuse 20 gehalterter Innenflansch 33 vorgesehen, der den Hebel 24 mit weitem Abstand umgibt. Zwischen den Innenflansch 33 und einem nahe des betätigungsstößelseitigen Endes am Hebel 24 befindlichen, in der Ausnehmung 30 kippbar geführten Außenflansches 34 ist eine Feder 35 eingespannt, die stärker ist als die Feder 28. Im Ruhezustand nach Fig.1 hält die Feder 35 den Hebel 24 mit seiner Ringflanschfläche 36 an seinem betätigungsstößelseitigen Ende in Anlage an der Bodenfläche 37 der Ausnehmung 30. An die Ringflanschfläche 36 schließt sich radial innenseitig eine kegelstumpfmantelartige Zentrierfläche 38 an, welcher eine entsprechende Fläche 39 am Boden der Ausnehmung 30 gegenübersteht. Im Ruhezustand bewirken die in Anlage befindlichen Flächen 38 und 39 eine zentrierte Halterung des Hebels 24 im Gehäuse 20. In Abänderung können die Flächen 38 und 39 sich auch radialaußen an die Ringflanschfläche 36 anschließen oder in deren Bereich selbst liegen. Die gehäusefeste Führungsbuchse weist einen in die Ausnehmung 30 ragenden, kegelförmigen Zentrieransatz 40 auf, auf welchen der Innenflansch 26 im Ruhezustand zum zentrierten Haltern des Hebels 24 teilweise aufschiebbar ist. Es können beide beschriebene Zentrierungen für den Hebel 24 oder, in Abwandlung, nur eine von diesen vorgesehen sein.

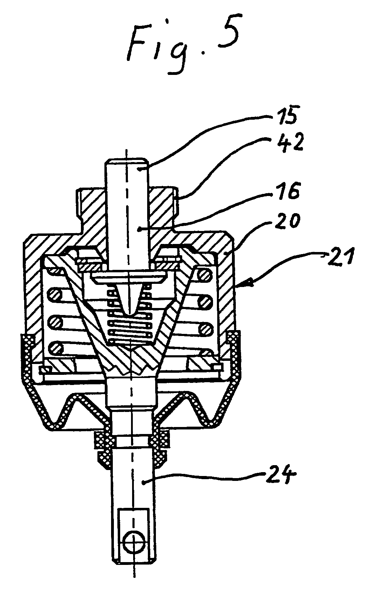

Im Bereich der Ausnehmung 30 weist der Hebel 24 eine der Form seiner Ausnehmung 23 angepaßt kegelförmige Außenkontur auf, so daß sich in der Ausnehmung 30 ein den Hebel 24 umgebender, in Richtung zur Mündung 32 erweiternder Ringraum 41 ergibt, in welchem sich die Feder 35 befindet; dieser Ringraum ermöglicht, wie aus Fig.4 ersichtlich, ein Kippen des Hebels aus der Längsrichtung 19 um einen großen Winkelbetrag. Die Betätigungsvorrichtung 21 weist insgesamt einen rotationssymmetrischen Aufbau um die Längsrichtung 19 auf.

Im Ruhezustand der Betätigungsvorrichtung 21 hält gemäß Fig.1 die Feder 35 den Hebel 24 in Anlage an der Bodenfläche 37 und die Feder 28 den Betätigungsstößel 16 zwischen die Sperrzähne 14 eingerastet, der Außenflansch 22 liegt auf dem Innenflansch 26 auf. Zum Betätigen der Betätigungsvorrichtung 21 kann am Hebel 24 etwa in Längsrichtung 19 vermittels des bereits erwähnten Betätigungszuges gezogen werden, der Hebel 24 gelangt dabei unter Kompression der Feder 35 in die in Fig.2 gezeigte, längsversetzte Lage, wobei er über den Innenflansch 26 und Außenflansch 22 den Betätigungsstößel 16 unter Ausrasten aus den Sperrzähnen 14 mitnimmt. Der Federteller 13 wird hierdurch drehfrei und der Federspeicherbremszylinder wird wie bereits erwähnt notgelöst. Anschließend kann der Hebel 24 freigegeben werden, die Feder 35 drückt ihn dabei, wie in Fig.3 gezeigt, bis zur Anlage an der Bodenfläche 37 zurück, wobei die Feder 28 den Betätigugnsstößel mitzunehmen sucht. Falls dabei, wie dargestellt, das Betätigungsende 15 auf einen Sperrzahn 14 trifft, bleibt der Betätigungsstößel 16 unter Kompression der Feder 28 stehen, bis bei erneuter, durch Wiederspannen der Speicherfeder 5 oder sonstige Bremsgestängebewegung bedingt ein kurzes Drehen des Federtellers 13 bis zum Einrasten des Betätigungsendes 15 unter der Kraft der Feder 28 zwischen zwei Sperrzähne 14 erfolgt.

Anstatt gemäß Fig.2 am Hebel in Längsrichtung 19 zu ziehen, kann auf diesen auch eine Querkraft in beliebiger Richtung ausgeübt werden, so daß er, wie in Fig.4 gezeigt, aus der Längsrichtung kippt. In Kipprichtung stützt er sich mit einer Randstelle seines Außenflansches 34 gegen die Bodenfläche 37 ab, gegenüberliegend zieht er mit seinem Innenflansch 26 über den Außenflansch 22 den Betätigungsstößel 16 außer Eingriff zu den Sperrzähnen 14. Im weiteren erfolgt das Notlösen wie beschrieben, die Ruhestellung kann nachfolgend entsprechend bewirkt werden.

Es ist wesentlich, daß die Zug- bzw. Kippkraft für den Hebel 24 von in Richtung der Längsrichtung 19 bis zum stumpfen Winkel zu dieser und in beliebigem Drehwinkel um diese verlaufen kann, somit eine sehr große Freiheit in der räumlichen Zuordnung von Betätigungsorgan und Betätigungsvorrichtung zueinander gegeben ist. Die Betätigungsvorrichtung stellt somit eine Getriebevorrichtung dar, welche eine in nahezu beliebiger Richtung verlaufende Verschiebebewegung in eine korrekte Verschiebebewegung für den Betätigungsstößel 16 umisetzt. Es sind bauliche Abwandlungen und Änderungen dieser Getriebevorrichtung möglich, soweit hierdurch die Richtungsumsetzung nicht wesentlich beeinträchtigt wird.

Die Betätigungsvorrichtung kann als vom zu betätigenden Bremsgerät gesondertes Bauteil ausgebildet werden, wie es die Fig.5 zeigt. Das Gehäuse 20 weist hierbei in seinem das Betätigungsende 15 umgebenden Bereich einen Gewindeabschnitt 42 auf, mit welchem es am Gehäuse des zu betätigenden Bremsgerätes, beispielsweise am entsprechend umgestalteten Gehäuse 2, festschraubbar ist. Eine derartige Betätigungsvorrichtung ist für unterschiedliche Bremsgeräte geeignet, kann daher in großen Stückzahlen billig gefertigt werden und vereinfacht die Gehäusegestaltung der Bremsgeräte.

Besonders vorteilhaft ist die Betätigungsvorrichtung für die Notlöseeinrichtung eines Federspeicherbremszylinder gemäß der erwähnten EP-B-0001805 verwendbar, wobei dieser lose oder integriert in eine Bremsklotz- oder Bremsscheibeneinheit verwendbar ist.

### Kurzfassung;

Die Betätigungsvorrichtung (21) für bremskrafterzeugende oder - übertragende Bremsgeräte von Schienenfahrzeugen, insb. für die Notlöseeinrichtung von Federspeicherbremszylinder (1), weist einen linear verschieblichen Betätigungsstößel (16) zum Betätigen einer Sperre oder dergl. des Bremsgerätes auf. Der Betätigungsstößel (16) endet mit einem Außenflansch (22), der vom Innenflansch (26) in einer Ausnehmung (23) eines gleichachsigen Hebels (24) in Sperrichtung hintergriffen ist. Der Hebel (24) liegt mit einem Außenflansch (34) gegen die Kraft einer Feder (35) abhebbar und abkippbar auf einer Bodenfläche (37) eines Gehäuses (20) auf. Eine schwächere Feder (28) belastet den Betätigungsstößel (16) in Einrastrichtung. Der Hebel (24) ist von einem manuellen Betätigungsorgan aus längsverschieb- oder kippbar, wobei er über den Innen- und den Außenflansch (26 bzw. 22) den Betätigungsstößel (16) in Entsperrichtung verschiebt.

Das Betätigungsorgan kann räumlich relativ zur Betätigungsvorrichtung (21) nahezu beliebig angeordnet sein, hierdurch sind optimale Anordnungen ohne diesen jeweils angepaßte Konstruktionen möglich.

### Aufstellung der Bezugszeichen.

- 1: Federspeicherbremszylinder
- 2: Gehäuse
- 3: Kolben
- 4: Beaufschlagungsraum
- 5: Speicherfeder
- 6: Federteller
- 7: Konuskupplung
- 8: Teil
- 9: Schraubgetriebe
- 10: Feder
- 11: Mutter
- 12: Kolbenstange
- 13: Federteller
- 14: Sperrzahn
- 15: Betätigungsende
- 16: Betätigungsstößel
- 17: Führungsbuchse
- 18: Achse
- 19: Längsrichtung
- 20: Gehäuse
- 21: Betätigungsvorrichtung
- 22: Außenflansch
- 23: Ausnehmung
- 24: Hebel
- 25: Mündung
- 26: Innenflansch
- 27: Boden
- 28: Feder
- 29: Führungskegel
- 30: Ausnehmung
- 31: Koppelstelle
- 32: Mündung
- 33: Innenflansch
- 34: Außenflansch
- 35: Feder
- 36: Ringflanschfläche
- 37: Bodenfläche
- 38: Zentrierfläche
- 39: Fläche
- 40: Zentrieransatz
- 41: Ringraum
- 42: Gewindeabschnitt
- 43: Staubschutzbalg

## Patentansprüche

1. Betätigungsvorrichtung für bremskrafterzeugende oder -übertragende Bremsgeräte von Schienenfahrzeugen, insbesondere für eine Notlöseeinrichtung eines Federspeicherbremszylinders (1 ), mit einem linear verschieblichen Betätigungsstößel (16) zum Betätigen beispielsweise einer Sperre, Kupplung, Bremse oder eines Ratschengetriebes, **dadurch gekennzeichnet, dass**
a) der Betätigungsstößel (16) mit einem Außenflansch (22) endet, der vom Innenflansch (26) in einer Ausnehmung (23) eines Hebels (24) hintergriffen ist, der an seinem freien Ende mit einem Betätigungsorgan koppelbar ist,
b) der Hebel (24) gegen die Kraft einer Feder (35) auf einer Bodenfläche (37) eines Gehäuses (20) abhebbar und abkippbar aufliegt,
c) eine sich am Hebel (24) abstützende und gegenüber der einen Feder (35) schwächere Feder (28) den Betätigungsstößel (16) entgegen der Betätigungsrichtung belastet.

2. Betätigungsvorrichtung nach Anspruch 1, **dadurch gekennzeichnet, daß** der Betätigungsstößel (16) an dem Gehäuse (20) längsverschieblich geführt ist und seinem Betätigungsende (15) abgewandt mit dem radial auskragenden Außenflansch (22) in der im wesentlichen sacklochartigen Ausnehmung (23) des Hebels (24) endet, wobei in die Ausnehmung (23) nahe ihrer Mündung (25) der den Betätigungsstößel (16) mit Spiel umfassende, den Außenflansch (22) hintergreifende Innenflansch (26) ragt, dessen Innendurchmesser kleiner als der Außendurchmesser des Außenflansches (22) ist, daß der sich im Ruhezustand etwa in Verlängerungsrichtung des Betätigungsstößels (16) erstreckende und gleichachsige Hebel (24) mit einer zumindest nahe seines betätigungshebelseitigen Endes befindlichen Ringflanschfläche (36) abhebbar auf der Bodenfläche (37) der Ausnehmung (30) des Gehäuses (20) aufsteht, daß sich zwischen der Seitenwandung der Ausnehmung (30) des Gehäuses (20) und dem Hebel (24) ein Ringraum (41) mit einer ein Kippen des Hebels (24) erlaubender Weite befindet.

3. Betätigungsvorrichtung nach Anspruch 2, **dadurch gekennzeichnet, daß** die den Betätigungsstößel (16) belastende Feder (28) zwischen den Boden (27) der Ausnehmung (23) des Hebels (24) und dem Außenflansch (22) und die den Hebel (24) belastende Feder (35) zwischen einen nahe der Mündung (32) der Ausnehmung (30) des Gehäuses (20) befindlichen, den Hebel (24) mit Abstand umgebenden, gehäusefesten Innenflansch (33) und einen nahe seines betätigungsseitigen Endes am Hebel (24) befindlichen Außenflansch (34) eingespannt ist.

4. Betätigungsvorrichtung nach Anspruch 3, **dadurch gekennzeichnet, daß** der Betätigungsstößel (16) einen von seinem Außenflansch (22) ausgehenden, in die ihn belastende Feder (28) eingreifenden Führungskegel (29) aufweist.

5. Betätigungsvorrichtung nach einem oder mehreren der vorstehenden Ansprüche 2 bis 4, **dadurch gekennzeichnet, daß** der Hebel (24) im Bereich der Ausnehmungen (23 und 30) glocken- bzw. hohlkegelartig mit betätigungsstößelseitig befindlicher Basis ausgebildet ist und daß der Ringraum (4I) eine in Entfernungsrichtung von der Bodenfläche (37) der Ausnehmung (30) des Gehäuses (20) zunehmende Weite aufweist.

6. Betätigungsvorrichtung nach einem oder mehreren der vorstehenden Ansprüche 2 bis 5, **dadurch gekennzeichnet, daß** sich an die Ringflanschfläche (36) radial innen- oder außenseitig eine kegelstumpfmantelartige Zentrierfläche (38) anschließt, welcher eine entsprechende Fläche (39) am Boden der Ausnehmung (30) des Gehäuses (20) gegenübersteht.

7. Betätigungsvorrichtung nach einem oder mehreren der vorstehenden Ansprüche 2 bis 6, **dadurch gekennzeichnet, daß** eine gehäusefeste Führungsbuchse (17) für den Betätigungsstößel (16) einen in die Ausnehmung (30) des Gehäuses (20) ragenden, kegelförmigen Zentrieransatz (40) trägt, auf welchen der Innenflansch (26) des Hebels (24) zumindest teilweise aufschiebbar ist.

8. Betätigungsvorrichtung nach den Ansprüchen 2 bis 7, **dadurch gekennzeichnet, daß** sich zwischen dem Gehäuse (20) und dem Hebel (24) ein die Mündung (32) der Ausnehmung (30) des Gehäuses (20) überdeckender Staubschutzbalg (43) erstreckt.

9. Betätigungsvorrichtung nach den Ansprüchen 2 bis 8, **gekennzeichnet durch** die Anordnung an einem Federspeicherbremszylinder (1) mit einer ein nichtselbsthemmendes Schraubgetriebe (9) aufweisenden Notlöseeinrichtung, wobei das Betätigungsende (15) des Betätigungsstößels (16) eine zwischen die Sperrzähne (14) eines mit einem drehbaren Teil (8) des Schraubgetriebes (9) koppelbaren Sperrzahnrades einlegbare Sperrklinke bildet.

10. Betätigungsvorrichtung nach Anspruch 9, **dadurch gekennzeichnet, daß** das Gehäuse (20) sich außenseitig und exzentrisch an einem Zylinderdeckel des Federspeicherbremszylinders (1) befindet, wobei die Längsrichtungen (19) von Betätigungsstößel (16) und Hebel (24) zumindest annähernd parallel zur Achse (18) des Federspeicherbremszylinders (I) verlaufen.

11. Betätigungsvorrichtung nach einem oder mehreren der vorstehenden Ansprüche 1 bis 10, **gekennzeichnet durch** eine rotationssymmetrische Ausbildung um die im Ruhezustand koaxialen Achsen von Betätigungsstößel (16) und Hebel (24).

12. Betätigungsvorrichtung nach einem oder mehreren der vorstehenden Ansprüche 1 bis 11, **dadurch gekennzeichnet, daß** das Gehäuse (20) an einem Gehäuse des zu betätigenden Bremsgeräts (1) lösbar befestigbar ist.

13. Betätigungsvorrichtung nach Anspruch 12, **dadurch gekennzeichnet, daß** das Gehäuse (20) in seinem das Betätigungsende (15) des Betätigungsstößels (16) umgebenden Bereich einen Gewindeabschnitt (42) aufweist, der mit dem Gehäuse des zu betätigenden Bremsgeräts (1) verschraubbar ist.

## Claims

1. An actuating device for braking force-generating or -transmitting braking devices in rail vehicles, in particular for an emergency release device of a spring brake cylinder (1), having a linearly movable actuating tappet (16) for the actuation of a stop, clutch, brake or ratchet gear, for example,
**characterised in that**
a) the actuating tappet (16) ends in an outer flange (22) behind which engages the inner flange (26) in a recess (23) in a lever (24), the free end of which can be coupled to an actuating organ,
b) the lever (24) sits on a base surface (37) of a housing (20) in such a manner that it can be lifted and tilted against the force of a spring (35),
c) a spring (28) resting on the lever (24) which is weaker than spring (35) loads the actuating tappet (16) against the direction of actuation.

2. An actuating device in accordance with claim 1,
**characterised in that**
the actuating tappet (16) is mounted in the housing (20) such that it is able to move longitudinally and, opposite its actuating end (15), ends in a radially protruding outer flange (22) located in a blind hole-shaped recess (23) in a lever (24), the inner flange (26) which engages behind the outer flange (22) and encloses the actuating tappet (16) with play projecting into the recess (23) near its mouth (25) and the internal diameter of the said inner flange (26) being smaller than the outer diameter of the outer flange (22), a ring flange surface (36) located at least near the actuating lever side end of the lever (24) which in the idle position extends approximately in extension of and coaxially to the actuating tappet (16) stands on the base surface (37) of the recess (30) of the housing (20) in such a manner that it can be lifted, and located between the side wall of the recess (30) of the housing (20) and the lever (24) is an annular space (41) which is wide enough to allow the lever (24) to tilt.

3. An actuating device in accordance with claim 2,
**characterised in that**
the spring (28) which loads the actuating tappet (16) is fixed between the base (27) of the recess (23) of the lever (24) and the outer flange (22) and the spring (35) which loads the lever (24) is fixed between an inner flange (33) located near to the mouth (32) of the recess (30) of the housing (20) which encloses the lever (24) at a distance and is fixed to the housing and an outer flange (34) which is located on the lever (24) near to its actuating-side end.

4. An actuating device in accordance with claim 3,
**characterised in that**
the actuating tappet (16) has a guide cone (29) which extends from its outer flange (22) and engages in the spring (28) which loads it.

5. An actuating device in accordance with one or more of the preceding claims 2 to 4,
**characterised in that**
the lever (24) is provided in the area of the recesses (23 and 30) in the form of a bell or hollow cone with a base located on the actuating tappet side and the width of the annular space (41) increases as it moves further away from the base surface (37) of the recess (30) of the housing (20).

6. An actuating device in accordance with one or more of the preceding claims 2 to 5,
**characterised in that**
located adjacent to the annular flange surface (36) radially internally or externally is a centring surface (38) shaped like a truncated conical sheath which is positioned opposite a corresponding surface (39) on the base of the recess(30) of the housing (20).

7. An actuating device in accordance with one or more of the preceding claims 2 to 6,
**characterised in that**
a guide bush (17) for the actuating tappet (16) which is fixed to the housing bears a conical centring shoulder (40) which projects into the recess (30) of the housing (20) and the inner flange (26) of the lever (24) can be slid along at least part of said centring shoulder (40).

8. An actuating device in accordance with claims 2 to 7,
**characterised in that**
a protective dust bellow (43) which covers the mouth (32) of the recess (30) of the housing (20) extends between the housing (20) and the lever (24).

9. An actuating device in accordance with claims 2 to 8,
**characterised by**
the positioning on a spring brake cylinder (1) of an emergency release device with a non-self-locking helical gear (9), the actuating end (15) of the actuating tappet (16) forming a detent pawl which can be inserted between the ratchets (14) of a ratchet wheel which can be coupled to a rotating part (8) of the helical gear (9).

10. An actuating device in accordance with claim 9,
**characterised in that**
the housing (20) is located outside and eccentrically in relation to a cylinder cover of the spring brake cylinder (1), the longitudinal axes (19) of the actuating tappet (16) and the lever (24) running at least approximately parallel to the axis (18) of the spring brake cylinder (1).

11. An actuating device in accordance with one or more of the preceding claims 1 to 10,
**characterised by**
a design which is rotationally symmetrical about the axes of the actuating tappet (16) and the lever (24) which are coaxial in the idle position.

12. An actuating device in accordance with one or more of the preceding claims 1 to 11,
**characterised in that**
the housing (20) can be fixed to a housing of the braking device (1) to be actuated in such a manner that it can be detached.

13. An actuating device in accordance with claim 12,
**characterised in that**
the area of the housing (20) enclosing the actuating end (15) of the actuating tappet (16) has a threaded section (42) which can be screwed to the housing of the braking device (1) to be actuated.

## Revendications

1. Dispositif d'actionnement d'appareils de freinage, produisant ou transmettant une force, de véhicules ferroviaires, notamment pour un dispositif de desserrage d'urgence d'un cylindre (1) de frein à ressort accumulateur, comprenant un poussoir (16) d'actionnement à déplacement linéaire pour l'actionnement, par exemple, d'un cliquet, d'un accouplement, d'un frein ou d'une transmission à cliquet, **caractérisé en ce que**
a) le poussoir (16) d'actionnement se termine par une bride (22) extérieure qui est prise derrière une bride (26) intérieure dans un évidement (23) d'un levier (24) qui peut être accouplé par son extrémité libre à un organe d'actionnement ;
b) le levier (24) s'applique en pouvant être soulevé et basculé à l'encontre de la force d'un ressort (35) sur une surface (37) de fond d'une enveloppe (20) ;
c) un ressort (28) qui s'appuie sur le levier (24) et qui est plus faible que le ressort (35) repousse le poussoir (16) d'actionnement dans le sens contraire au sens d'actionnement.

2. Dispositif d'actionnement suivant la revendication 1, **caractérisé en ce que** le poussoir (16) d'actionnement est guidé à coulissement longitudinal sur l'enveloppe (20) et son extrémité (15) d'actionnement éloignée de la bride (22) extérieure en saillie radiale se termine dans l'évidement (23) sensiblement en trous borgnes du levier (24), dans lequel, dans l'évidement (23) à proximité de son embouchure (25), pénètre la bride (26) intérieure qui entoure avec jeu le poussoir (16) d'actionnement qui vient derrière la bride (22) extérieure et dont le diamètre intérieur est inférieur au diamètre extérieur de la bride (22) extérieure, **en ce que** le levier (24) s'étendant à l'état de repos à peu près dans la direction dans le prolongement du poussoir (16) d'actionnement et en ayant le même axe peut être soulevé sur la surface (37) de fond de l'évidement (30) de l'enveloppe (20) par une surface (36) de bride annulaire se trouvant au moins à proximité de son extrémité du côté du levier d'actionnement, **en ce qu'**il y a, entre la paroi latérale de l'évidement (30) de l'enveloppe (20) et le levier (24), un espace (41 ) annulaire d'une largeur permettant un basculement du levier (24).

3. Dispositif d'actionnement suivant la revendication 2, **caractérisé en ce que** le ressort (28) repoussant le poussoir (16) d'actionnement est tendu entre le fond (27) de l'évidement (23) du levier (24) et la bride (22) extérieure et le ressort (35) repoussant le levier (24) entre une bride (33) intérieure se trouvant à proximité de l'embouchure (32) de l'évidement (30) de l'enveloppement (20), entourant le levier (24) à distance et fixée à l'enveloppe et une bride (34) extérieure se trouvant à proximité de son extrémité du côté d'actionnement sur le levier (24).

4. Dispositif d'actionnement suivant la revendication 3, **caractérisé en ce que** le poussoir (16) d'actionnement a un cône (29) de guidage partant de sa bride (22) extérieure et pénétrant dans le ressort (28) qui la repousse.

5. Dispositif d'actionnement suivant l'une ou plusieurs des revendications 2 à 4 précédentes, **caractérisé en ce que** le levier (24) est constitué dans la région des évidements (23 et 30) à la manière d'une cloche ou d'un cône creux ayant une base se trouvant du côté du poussoir d'actionnement et **en ce que** l'espace (41) annulaire a une largeur croissant dans le sens s'éloignant de la surface (37) du fond de l'évidement (30) du boîtier (20).

6. Dispositif d'actionnement suivant l'une ou plusieurs des revendications 2 à 5 précédentes, **caractérisé en ce qu'**à la surface (36) de bride annulaire se raccorde une surface (38) de centrage radial du côté intérieur ou du côté extérieur de type à surface latérale tronconique, qui fait face à une surface (39) correspondante du fond de l'évidement (30) de l'enveloppe (20).

7. Dispositif d'actionnement suivant l'une ou plusieurs des revendications 2 à 6 précédentes, **caractérisé en ce qu'**un manchon (37) de guidage fixé à l'enveloppe et destiné au poussoir (16) d'actionnement porte un prolongement (40) de centrage conique pénétrant dans l'évidement (30) de l'enveloppe (20) et que la bride (26) intérieure du levier (24) peut coiffer au moins en partie.

8. Dispositif d'actionnement suivant les revendications 2 à 7, **caractérisé en ce qu'**entre l'enveloppement (20) et le levier (24) s'étend un soufflet (43) de protection vis-à-vis de la poussière recouvrant l'embouchure (32) de l'évidement (30) de l'enveloppement (20).

9. Dispositif d'actionnement suivant les revendications 2 à 8, **caractérisé par** le montage sur un cylindre (1) de frein à ressort accumulateur ayant un dispositif de desserrage d'urgence comportant un entraînement (9) à vis qui n'est pas à blocage automatique, l'extrémité (15) d'actionnement du poussoir (16) d'actionnement formant un cliquet d'arrêt pouvant être mis entre dents (14) d'un rochet qui peut être accouplé avec une partie (8) tournante de la transmission (9) à vis.

10. Dispositif d'actionnement suivant la revendication 9, **caractérisé en ce que** l'enveloppe (20) se trouve du côté extérieur et excentrée sur un couvercle du cylindre (1) de frein à ressort accumulateur, les directions (19) longitudinales du poussoir (16) d'actionnement et du levier (24) s'étendant au moins à peu près parallèlement à l'axe (18) du cylindre (1) de frein à ressort accumulateur.

11. Dispositif d'actionnement suivant l'une ou plusieurs des revendications 1 à 10 précédentes, **caractérisé par** une constitution de révolution par rapport aux axes coaxiaux à l'état de repos du poussoir (16) d'actionnement et du levier (24).

12. Dispositif d'actionnement suivant l'une ou plusieurs des revendications 1 à 11 précédentes, **caractérisé en ce que** l'enveloppe (20) peut être fixée de manière amovible sur un corps de l'appareil (1) de freinage à actionner.

13. Dispositif d'actionnement suivant la revendication 12, **caractérisé en ce que** l'enveloppe (20) a dans sa partie entourant l'extrémité (15) d'actionnement du poussoir (16) d'actionnement, une partie (42) filetée qui peut se visser avec le corps de l'appareil (1 ) de freinage à actionner.
